(19) Europäisches Patentamt
European Patent Office
Office européen des brevets

(11) Veröffentlichungsnummer : **0 019 842**
**B1**

(12) # EUROPÄISCHE PATENTSCHRIFT

(45) Veröffentlichungstag der Patentschrift : **21.07.82**

(51) Int. Cl.³ : **C 09 B 45/16**, D 06 P 3/24

(21) Anmeldenummer : **80102817.6**

(22) Anmeldetag : **21.05.80**
**Die Akte enthält technische Angaben, die nach dem Eingang der Anmeldung eingereicht wurden und die nicht in dieser Patentschrift enthalten sind.**

(54) **1 : 2 Chromkomplexfarbstoff der Monoazoreihe und dessen Verwendung beim Färben von Polyamid.**

(30) Priorität : **02.06.79 DE 2922690**

(43) Veröffentlichungstag der Anmeldung : **10.12.80 (Patentblatt 80/25)**

(45) Bekanntmachung des Hinweises auf die Patenterteilung : **21.07.82 Patentblatt 82/29**

(84) Benannte Vertragsstaaten : **CH DE FR GB IT LI**

(56) Entgegenhaltungen :
**DE - B - 1 012 007**
**FR - A - 1 102 028**
**FR - A - 1 371 123**

(73) Patentinhaber : **BAYER AG**
**Zentralbereich Patente, Marken und Lizenzen**
**D-5090 Leverkusen 1, Bayerwerk (DE)**

(72) Erfinder : **Grütze, Joachim, Dr.**
**Andreas-Gryphius-Strasse 24**
**D-5000 Köln 80 (DE)**
Erfinder : **Scholl, Walter, Dr.**
**Bilharzstrasse 22**
**D-5000 Köln 80 (DE)**

**EP 0 019 842 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# 1: 2 Chromkomplexfarbstoff der Monoazoreihe und dessen Verwendung beim Färben von Polyamid

Die Erfindung betrifft einen neuen chromhaltigen Azofarbstoff, der in der Säureform folgender Formel entspricht :

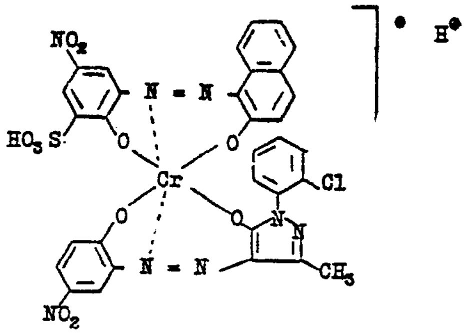

sowie dessen Verwendung zum Färben von natürlichem und synthetischem Polyamid wie Wolle, Seide, Leder, Fell, Nylon, Perlon.

Der Farbstoff wird in üblicher Weise über den 1: 1-Cr-Komplex eines der Ausgangsfarbstoffe, vorzugsweise über den 1: 1-Cr-Komplex des sulfogruppenhaltigen Farbstoffs hergestellt.

Der Farbstoff wird im allgemeinen in Form seiner Salze, insbesondere der Li-, Na-, K- oder Ammonium-Salze eingesetzt.

Beispiel

300 g wässrige Farbstoffpaste, die 0,1 Mol Farbstoff aus diazotiertem 4-Nitro-2-aminophenol und 1-(2-Chlorphenyl)-3-methylpyrazolon-5 enthalten sowie 63,4 g wässrige Farbstoffpaste aus 0,1 Mol 1: 1-Chromkomplex des Farbstoffs 4-Nitro-2-amino-phenol-6-sulfonsäure → β-Naphthol werden in 300 g Wasser verrührt, auf 90 °C erwärmt und 2 Stunden bei 90 °C und pH 7-8 bis zum Ende der Chromkomplexbildung gerührt. Man läßt auf 60 °C abkühlen und salzt den Chrommischkomplex mit 60 g Natriumchlorid aus, saugt ab und trocknet bei 70 °C im Vakuum. Man erhält ein dunkelbraunes Pulver, das Polyamid in braunen Tönen färbt.

Der nächstvergleichbare Farbstoff ist Nr. 5 der Tabelle in Spalte 5/6 der deutschen Auslegeschrift 10 12 007.

**Ansprüche**

1. Chromkomplexfarbstoff der in der Säureform folgender Formel entspricht :

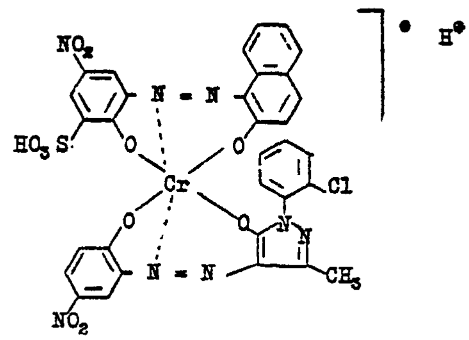

2. Verwendung des Farbstoffs des Anspruchs 1 zum Färben von natürlichem und synthetischem Polyamid.

**Claims**

1. Chromium complex dyestuff which, in the acid form, corresponds to the following formula :

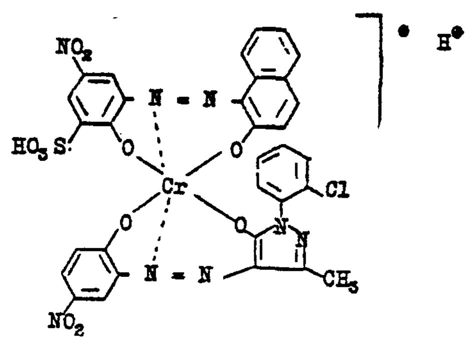

2. Use of the dyestuff of Claim 1 for dyeing natural and synthetic polyamide.

**Revendications**

1. Colorant complexe de chrome qui, sous la forme acide, correspond à la formule suivante :

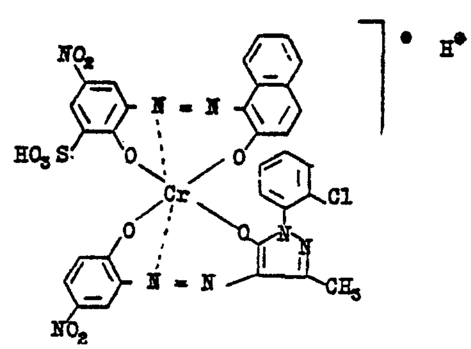

2. Utilisation du colorant suivant la revendication 1 pour la teinture de polyamide naturel et synthétique.